# EUROPEAN PATENT SPECIFICATION

(11) **EP 4 590 785 B1**
(45) Date of publication and mention of the grant of the patent: **02.12.2026**
(21) Application number: 23772518.9
(22) Date of filing: 19.09.2023
(51) Int. Cl.: C09K 11/02, C09K 11/56, C09K 11/70, C09K 11/88

(54) **QUANTUM DOT SHELL SYNTHESIS**
QUANTENPUNKTHÜLLENSYNTHESE
SYNTHÈSE D'ENVELOPPE À POINTS QUANTIQUES

(30) Priority: 20.09.2022 EP 22196634
(43) Date of publication of application: 30.07.2025
(73) Proprietor: QustomDot B.V., 9052 Ghent - Zwijnaarde (BE)
(72) Inventor: WALRAVENS, Willem, 9052 Ghent Zwijnaarde (BE); NAKONECHNYI, Igor, 9052 Ghent-Zwijnaarde (BE); BROWN, Alasdair Angus Macintyre, 9052 Ghent Zwijnaarde (BE); PRATO MODESTINO, Rafael Alberto, 9052 Ghent Zwijnaarde (BE); GRIGEL, Valeriia, 9052 Ghent Zwijnaarde (BE)
(74) Representative: Ipsilon Belgium
(86) International application number: PCT/EP2023/075792
(87) International publication number: WO 2024/061900

(56) References cited:
- US-A1- 2021 324 268

## Description

### Field

The invention relates to the synthesis of core/shell/shell quantum dots, particularly to a novel shell synthesis method.

### Background

Core/shell/shell quantum dots have the property of absorbing blue (and UV) light and emitting that light at a longer wavelength, for example as green or red light. Because they can be made as efficient luminescent materials, where the color of the emission can be tuned by changing the crystal size, they can be applied as a down-convertor material in lighting and LED displays. A particularly interesting application subfield is found in micro LED displays, where every pixel contains a blue, green and red emission source (so called self-emissive screens) and where the pixel size shrinks to below 10 µm. At this length scale, these quantum dots have a distinct advantage over conventional down-converting materials or native green and red emitting materials because they are more efficient.

The first QDs incorporated in commercial displays were QDs comprising cadmium selenide (CdSe), a direct-gap semiconductor having an emission that can be tuned throughout the visible range by changing the size of the CdSe crystallites. Because of stringent restrictions on the use of cadmium in consumer products, however, Cd-based quantum dots are generally considered as ill-suited and a shift from Cd-based quantum dots to Cd-free alternatives such as indium phosphide (InP) QDs has been initiated. The photothermal instability of InP-based QDs is addressed by the core/shell/shell architecture.

In the case of metal-S/Se shell layers, the synthesis of the shells relies on the reaction between a metal carboxylate and a tertiary phosphine sulfide/selenide. However, this reaction is slow and is often not robust due to the presence of impurities in commercially available secondary phosphine sulfides/selenides. This leads to undesirable optic properties (low PLQY) and makes it difficult to upscale the process.

Hence, there is a need in the art for fast and robust shell syntheses leading to core/shell/shell quantum dots having good optic properties (high PLQY).

A method of preparing InP/ZnSe/ZnS core-shell quantum dots is disclosed in US2021324268 A1.

### Description of the invention

In an aspect, the invention provides a method for preparing a quantum dot, comprising the steps of:
(a) preparing a core of a binary, ternary or quaternary material comprising:
   - one or more first core elements selected from the group consisting of In, Ga and Al, and
   - one or more second core elements selected from the group consisting of P, As and Sb;
(b) forming a first layer on the core by contacting the core with a mixture comprising a metal precursor, a secondary phosphine selenide and a tertiary phosphine selenide;
(c) forming a second layer on the first layer by contacting the product of step (b) with a mixture comprising a metal precursor, a secondary phosphine sulfide and a tertiary phosphine sulfide.

Such a method may be called a method according to or of the invention herein.

A quantum dot prepared via a method according to the invention is a (semi)spherical nanoparticle comprising a core, a first layer on the core and a second layer on the first layer. Such a quantum dot may also be called a core/shell/shell quantum dot. It is understood that a quantum dot is different from a quantum rod, which is an elongated semiconductor nanoparticle.

A core/shell/shell quantum dot may be represented by core/first layer/second layer. For example, InP/ZnSe/Zn₁₋ₓCdₓS refers to a quantum dot comprising an InP core (i.e. a core comprising or (essentially) consisting of InP), a ZnSe first layer (i.e. a first layer comprising or (essentially) consisting of ZnSe), and a Zn₁₋ₓCdₓS second layer (i.e. a second layer comprising or (essentially) consisting of a Zn, Cd and S alloy, wherein the molar ratio between the elements are as indicated). In another example, InP/Zn(S,Se)/ZnS refers to a quantum dor comprising an InP core, a Zn(S,Se) first layer (i.e. a first layer comprising or (essentially) consisting of Zn, S and Se alloy, wherein the molar ratio between Zn and S+Se is essentially 1) and a ZnS second layer. In this context, the terminology AB or ABC core, layer or shell, refers to a core, layer or shell comprising or (essentially) consisting of AB or ABC, respectively.

The composition of the quantum dot, the core, the first layer and the second layer (i.e. the elements comprised therein and their molar ratios) may be determined by EDX (Energy-dispersive X-ray spectroscopy) on an ensemble of quantum dots.

In the context of this application, a quantum dot is able to absorb and emit electromagnetic radiation, wherein the wavelength of the emitted radiation is higher than the wavelength of the absorbed radiation. Preferably, the absorbed radiation is in the visible spectrum ("visible light").

It is an advantage of a method according to the invention that a quantum dot can be obtained with good optical properties, i.e. with a high photoluminescence, via a robust and fast reaction with a high yield at relatively low temperatures (e.g. 240°C), meaning that the methods are cost-effective. Furthermore, the methods allow a good control over shell thickness.

A suitable measure for photoluminescence is the "photoluminescent quantum yield" (PLQY), which is the ratio of the number of emitted photons that can be collected to the number of photons absorbed by the quantum dots. This PLQY may also be called the internal PLQY, in contrast with the external PLQY which is defined as the ratio of the total number of emitted photons to the number of photons provided to the quantum dots. Unless explicitly mentioned, PLQY refers to the internal PLQY herein.

In embodiments, a method according to the invention results in a quantum dot having a PLQY of at least 85%, at least 85.5%, at least 86%, at least 86.5%, at least 87%, at least 87.5%, at least 88%, at least 88.5%, at least 89%, at least 89.5%, at least 90%, at least 90.5%, at least 91%, at least 91.5%, at least 92%, at least 92.5%, at least 93%, at least 93.5%, at least 94%, at least 94.5%, at least 95%, at least 95.5%, at least 96%, at least 96.5%, at least 97%, at least 97.5%, at least 98%, at least 98.5%, at least 99%, or at least 99.5%.

The method according to the invention is also robust, fast and renders a high yield. Methods in the art for preparing core/shell/shell quantum dots often rely solely on tertiary phosphine selenides and sulfides during the formation of the first and the second layer, respectively. Without being bound to this theory, since these species are relatively unreactive, these methods are prone to the presence of (slightly more reactive) impurities in the phosphine, resulting in significant inter- and intra-batch variations in shell compositions, and hence in properties such as photoluminescence. Such impurities are unavoidable in commercial sources. Furthermore, the relative inertness of the tertiary phosphines leads to a slow reaction and a low yield.

The present invention circumvents this issue by the inclusion of more reactive, secondary phosphine selenides and sulfides besides less reactive, tertiary phosphine selenides and sulfides, yielding a faster (at a relatively low temperature such as 240°C), more robust (i.e. more homogenous) synthesis having a higher overall yield that is more suitable for scaling up. A higher yield at a relative low temperature has the economic benefit of being more cost-effective. The robustness means that the outcome of the methods is not prone to or significantly influenced by the presence of impurities or small variations in reaction conditions.

Any reactive impurities in the tertiary phosphines are trumped by the presence of the reactive secondary phosphines. Without being bound to this theory, the secondary phosphines serve as the reactive species during the formation of the first and the second shell, respectively, whereas the tertiary phosphines act as selenide and sulfide reservoirs for the reaction, respectively. It is understood that this combination of reactive secondary species and unreactive tertiary species acting as a sulfide/selenide reservoir may depend on a set of equilibrium reactions not further discussed herein.

The presence of more reactive phosphines during the reaction, also renders it feasible to use relatively unreactive metal precursors (e.g. long chain metal carboxylates comprising more than 5 carbon atoms), and to have a controlled synthesis of the second layer, whose synthesis often has a low rate, necessitating a high temperature or a long reaction time in the absence of the secondary phosphines.

It is understood that the application of a method according to the invention generally results in a plurality of quantum dots. Wherever a reference is made to a property of a single quantum dot, reference is preferably made to the average value of the property over the plurality of quantum dots. The average may be a number-weighted average or a mass-weighted average.

In embodiments, the first layer and the second layer are (semi)spherical layers arranged concentrically around the core.

In embodiments, the first layer surrounds the core and the second layer surrounds the second layer.

In embodiments, the first layer and the second layer are solid layers.

In embodiments, the quantum dot has a diameter from 5 up to 30 nm, up to 29 nm, up to 28 nm, up to 27 nm, up to 26 nm, up to 25 nm, up to 24 nm, up to 23 nm, up to 22 nm, up to 21 nm, up to 20 nm, up to 19 nm, up to 18 nm, up to 17 nm, up to 16 nm, up to 15 nm, up to 14 nm, up to 13 nm, up to 12 nm, up to 11 nm, up to 10 nm, up to 9.5 nm, up to 9 nm, up to 8.5 nm, up to 8 nm. In embodiments, the quantum dot has a diameter from 6 up to 30 nm, up to 29 nm, up to 28 nm, up to 27 nm, up to 26 nm, up to 25 nm, up to 24 nm, up to 23 nm, up to 22 nm, up to 21 nm, up to 20 nm, up to 19 nm, up to 18 nm, up to 17 nm, up to 16 nm, up to 15 nm, up to 14 nm, up to 13 nm, up to 12 nm, up to 11 nm, up to 10 nm, up to 9.5 nm, up to 9 nm, up to 8.5 nm, up to 8 nm. Quantum dots having an average diameter in this range can provide good optical properties for down-conversion because the absorption coefficient at wavelengths corresponding to the pump light strongly exceeds the absorption coefficient at wavelengths corresponding to the quantum dot emission.

The core is a (semi)spherical, semiconductor nanocrystal, having optical and electronic properties that are distinct from larger particles of the same materials due to quantum mechanical effects. A core can be considered a quantum dot in its own right, albeit not a core/shell/shell quantum dot.

The core is (made) of a binary, ternary or quaternary material (or compound). A binary, ternary or quaternary material is a material consisting of 2, 3 or 4 different elements, respectively. It is understood that the order of the elements in the formula of a tertiary or quaternary material is a matter of convention and has no bearing on the composition of the material.

In embodiments, a binary, ternary or quaternary material is a binary or ternary material.

In embodiments, a binary, ternary or quaternary material is InP, InGaP, InAs, InSb or InSbAs.

In embodiments, a binary material is InP, InAs, InSb, GaP, GaAs, GaSb, AlP, AlAs or AlSb.

In embodiments, a tertiary material is InPAs, InPSb, InAsSb, GaPAs, GaPSb, GaAsSb, AlPAs, AlPSb, AlAsSb, InGaP, InGaAs, InGaSb, InAlP, InAlAs, InAlSb, GaAlP, GaAlAs or GaAlSb.

In embodiments, a tertiary material is InGaP or InSbAs.

In embodiments, a quaternary material is InPAsSb, GaPAsSb, AIPAsSb, InGaPAs, InGaPSb, InGaAsSb, InAlPAs, InAlPSb, InAlAsSb, GaAlPAs, GaAlPSb, GaAlAsSb, InGaAlP, InGaAlAs or InGaAlSb.

In embodiments, the binary, ternary or quaternary material is InP. Such cores are highly attractive for downconverter purposes as they emit light in the visible spectrum upon illumination with blue (and UV) light when they are 2 nm to 4 nm in diameter.

The preparation of the core in step (a) comprised in a method according to the invention may be performed with any commonly known technique. For example, and without being limiting, a core may be synthesized by mixing a halide of each of the first core elements with a metal halide, preferably a zinc halide, and injecting the resulting mixture with a precursor of the second core element, preferably wherein the injection is performed at a temperature from 150°C up to 250°C, more preferably from 150°C up to 200°C. As an example, an InP core may be synthesized by mixing InCl₃ and ZnCl₂ in oleylamine and injecting a phosphor precursor (tris(diethylamino)phosphine for example) at an elevated temperature (180°C).

In embodiments, the preparation of the core in step (a) comprised in a method according to the invention is a colloidal synthesis.

In embodiments, the core has a diameter from 1 nm up to 5 nm, preferably from 1.5 nm up to 4.5 nm, more preferably from 2 nm up to 4 nm. A suitable core diameter ensures that the quantum dots emit light in the visible spectrum upon illumination with blue (and UV) light.

In embodiments, the yield of step (a) comprised in a method according to the invention is at least 90%, at least 90.5%, at least 91%, at least 91.5%, at least 92%, at least 92.5%, at least 93%, at least 93.5%, at least 94%, at least 94.5%, at least 95%, at least 95.5%, at least 96%, at least 96.5%, at least 97%, at least 97.5%, at least 98%, at least 98.5%, at least 99%, or at least 99.5%.

The first layer, which may also be called the first shell, the inner shell or the inner layer, is formed during step (b) of a method according to the invention by contacting the core with a mixture comprising a metal precursor, a secondary phosphine selenide and a tertiary phosphine selenide. The first layer is beneficial during the production of the quantum dot, but is not expected to have a significant effect on the optical properties of the quantum dot because it creates a barrier sufficiently thin to obtain a fast transfer by tunneling of charge carriers between the second layer and the core.

A secondary phosphine selenide has the general structure R¹R²P-Se, wherein R¹ and R² are organic moieties, preferably wherein the bond between P and R¹ and R², respectively, is formally a single phosphor-carbon bond.

In embodiments, R¹ and R² are hydrocarbon moieties. Preferably, R¹ and R² are independently an alkyl, a cycloalkyl, an aryl, an alkenyl, a cycloalkenyl, an alkynyl or a cycloalkynyl. More preferably, R¹ and R² are independently an alkyl, a cycloalkyl or an aryl.

In embodiments, R¹ and R² are C₂₋₁₀ hydrocarbon moieties. Preferably, R¹ and R² are independently a C₂₋₁₀ alkyl, a C₃₋₁₀ cycloalkyl, a C₃₋₁₀ aryl, a C₂₋₁₀ alkenyl, a C₃₋₁₀ cycloalkenyl, a C₂₋₁₀ alkynyl or a C₃₋₁₀ cycloalkynyl. More preferably, R¹ and R² are independently a C₂₋₁₀ alkyl, a C₃₋₁₀ cycloalkyl or a C₃₋₁₀ aryl.

In embodiments, R¹ and R² are C₂₋₆ hydrocarbon moieties. Preferably, R¹ and R² are independently a C₂₋₆ alkyl, a C₃₋₆ cycloalkyl, a C₃₋₆ aryl, a C₂₋₆ alkenyl, a C₃₋₆ cycloalkenyl, a C₂₋₆ alkynyl or a C₃₋₆ cycloalkynyl. More preferably, R¹ and R² are independently a C₂₋₆ alkyl, a C₃₋₆ cycloalkyl or a C₃₋₆ aryl.

In embodiments, R¹ and R² are the same. The double substitution of P with R¹=R² may be with any group as defined above.

In embodiments, R¹ and R² are different. The asymmetric substitution of P with R¹ and R² may be with any two non-identical groups as defined above.

In embodiments, the secondary phosphine selenide is diphenylphosphine selenide, di-2-norbornylphosphine selenide, di-iso-butylphosphine selenide, di-tert-butylphosphine selenide, dicyclopentylphosphine selenide, dicyclohexylphosphine selenide or 9-phosphabicyclononane selenide.

In embodiments, the secondary phosphine selenide is diphenylphosphine selenide.

An aryl is defined herein a singly bonded aromatic hydrocarbon moiety. A C_{x-y} moiety is defined herein as a moiety having a total number of comprised carbon atoms from x up to (and including) y.

A tertiary phosphine selenide has the general structure R³R⁴R⁵P=Se, wherein R³, R⁴ and R⁵ are organic moieties, preferably wherein the bond between P and R³, R⁴ and R⁵, respectively, is formally a single phosphor-carbon bond.

In embodiments, R³, R⁴ and R⁵ are hydrocarbon moieties. Preferably, R³, R⁴ and R⁵ are independently an alkyl, a cycloalkyl, an aryl, an alkenyl, a cycloalkenyl, an alkynyl or a cycloalkynyl. More preferably, R³, R⁴ and R⁵ are independently an alkyl, a cycloalkyl or an aryl.

In embodiments, R³, R⁴ and R⁵ are C₂₋₁₀ hydrocarbon moieties. Preferably, R³, R⁴ and R⁵ are independently a C₂₋₁₀ alkyl, a C₃₋₁₀ cycloalkyl, a C₃₋₁₀ aryl, a C₂₋₁₀ alkenyl, a C₃₋₁₀ cycloalkenyl, a C₂₋₁₀ alkynyl or a C₃₋₁₀ cycloalkynyl. More preferably, R³, R⁴ and R⁵ are independently a C₂₋₁₀ alkyl, a C₃₋₁₀ cycloalkyl or a C₃₋₁₀ aryl.

In embodiments, R³, R⁴ and R⁵ are C₂₋₆ hydrocarbon moieties. Preferably, R³, R⁴ and R⁵ are independently a C₂₋₆ alkyl, a C₃₋₆ cycloalkyl, a C₃₋₆ aryl, a C₂₋₆ alkenyl, a C₃₋₆ cycloalkenyl, a C₂₋₆ alkynyl or a C₃₋₆ cycloalkynyl. More preferably, R³, R⁴ and R⁵ are independently a C₂₋₆ alkyl, a C₃₋₆ cycloalkyl or a C₃₋₆ aryl.

In embodiments, R³, R⁴ and R⁵ are the same. The triple substitution of P with R³=R⁴=R⁵ may be with any group as defined above.

In embodiments, R³, R⁴ and R⁵ are different. The asymmetric substitution of P with R³, R⁴ and R⁵ may be with any three non-identical groups as defined above.

In embodiments, the tertiary phosphine selenide is tri-n-octylphosphine selenide, triethylphosphine selenide, tri-n-propylphosphine selenide, tri-n-butylphosphine selenide, triisobutylphosphine selenide, tri-n-hexylphosphine selenide, di-tert-butyl(n-butyl)phosphine selenide or triphenyl phosphine selenide.

In embodiments, the tertiary phosphine selenide is tri-n-octylphosphine selenide.

In embodiments, the mixture used in step (b) of a method according to the invention comprises a secondary phosphine sulfide and a tertiary phosphine sulfide, in addition to the secondary phosphine selenide and the tertiary phosphine selenide. Preferably, the secondary phosphine sulfide and the tertiary phosphine sulfide may be as described in any of the embodiments below, in the context of the second layer.

In embodiments, the first shell comprises or consist of a Zn, S and Se alloy, represented by Zn(Se,S) or ZnSe₁₋ₓSₓ, wherein x is the molar ratio of the number of sulfur atoms to the total number of sulfur and selenide atoms. Such a first shell may be obtained by adding a secondary phosphine sulfide and a tertiary phosphine sulfide to the mixture used in step (b) of a method according to the invention, in addition to the secondary phosphine selenide and the tertiary phosphine selenide. Preferably, x is equal to or higher than 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, 0.51, 0.52, 0.53, 0.54, 0.55, 0.56, 0.57, 0.58, 0.59, 0.6, 0.61, 0.62, 0.63, 0.64, 0.65, 0.66, 0.67, 0.68, 0.69, 0.7, 0.71, 0.72, 0.73, 0.74, 0.75, 0.76, 0.77, 0.78, 0.79, 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99. Alternatively, x is equal to or lower than 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, 0.51, 0.52, 0.53, 0.54, 0.55, 0.56, 0.57, 0.58, 0.59, 0.6, 0.61, 0.62, 0.63, 0.64, 0.65, 0.66, 0.67, 0.68, 0.69, 0.7, 0.71, 0.72, 0.73, 0.74, 0.75, 0.76, 0.77, 0.78, 0.79, 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99.

In embodiments, the metal precursor used in step (b) of a method according to the invention is a metal carboxylate or a metal thiolate.

In embodiments, the metal precursor used in step (b) of a method according to the invention is a metal C₁₀₋₂₂ carboxylate, preferably a zinc C₁₀₋₂₂ carboxylate or cadmium C₁₀₋₂₂ carboxylate, more preferably a zinc C₁₀₋₂₂ carboxylate.

In the context of this invention, a metal thiolate is any organic compound wherein metal ion is bound or complexed to a formally negatively charged sulfur atom, and can thus be represented by M-S-R or M⁺⁻S-R, wherein M is the metal, S is the sulfur atom and R is any organic moiety. For example, a metal thiolate may be a metal thiocarboxylate, a metal dithiocarboxylate, a metal thiocarbamate or a metal dithiocarbamate, without being limiting.

In embodiments, the metal precursor used in step (b) of a method according to the invention is a metal dithiocarbamate or a metal thiocarbamate, preferably a zinc dithiocarbamate, a zinc thiocarbamate, a cadmium dithiocarbamate or a zinc thiocarbamate, more preferably a zinc dithiocarbamate or a cadmium dithiocarbamate. Preferably, the dithiocarbamate is a dialkyldithiocarbamate and/or the thiocarbamate is an alkylthiocarbamate, wherein each of the alkyl groups is independently is a C₁₋₁₀ alkyl, preferably a C₂₋₅ alkyl, more preferably an ethyl.In embodiments, the metal precursor used in step (b) of a method according to the invention is a metal dithiocarbamate, preferably a zinc dithiocarbamate or a cadmium dithiocarbamate, more preferably a zinc dithiocarbamate. Preferably, the dithiocarbamate is a dialkyldithiocarbamate, wherein each of the alkyl groups is independently is a C₁₋₁₀ alkyl, preferably a C₂₋₅ alkyl, more preferably an ethyl.

In embodiments, the metal precursor used in step (b) of a method according to the invention is zinc diethyldithiocarbamate.

In embodiments, the metal precursor used in step (b) of a method according to the invention is a metal oleate, stearate or myristate, preferably zinc oleate, cadmium oleate, zinc stearate, cadmium stearate, zinc myristate or cadmium myristate, more preferably zinc oleate, zinc stearate or zinc myristate.

In alternative embodiments, the metal precursor used in step (b) of the method according to the invention is a C₂₋₆ carboxylate, preferably a zinc C₂₋₆ carboxylate or cadmium C₂₋₆ carboxylate. In embodiments, the metal precursor used in step (b) of the method according to the invention is a C₂₋₄ carboxylate, preferably a zinc C₂₋₄ carboxylate or cadmium C₂₋₄ carboxylate. In embodiments, the metal precursor used in step (b) of the method according to the invention is a C₂₋₃ carboxylate, preferably a zinc C₂₋₃ carboxylate or cadmium C₂₋₃ carboxylate. In embodiments, the metal precursor used in step (b) of the method according to the invention is an acetate, preferably zinc acetate or cadmium acetate.

In embodiments, the metal precursor used in step (b) of a method according to the invention is a zinc or cadmium precursor, preferably a zinc or cadmium carboxylate or thiolate. In preferred embodiments, the metal precursor is a zinc precursor, preferably a zinc carboxylate or thiolate. The identity of the metal determines the composition of the first layer. For example, if a zinc precursor is used, the first layer will comprise or (essentially) consist of ZnSe, wherein Zn is derived from the zinc precursor, and Se from the secondary phosphine selenide and the tertiary phosphine selenide. As another example, by using a mixture of zinc precursor and cadmium precursor, a first shell comprising or (essentially) consisting of a Zn, Cd and Se alloy is obtained. In this context, the notation Zn₁₋ₓCdₓSe refers to the composition of the first shell wherein the molar ratio Cd/(Cd+Zn) is x. This molar ratio is determined by, preferably is (essentially) equal to, the molar ratio Cd/(Cd+Zn) in the mixture of zinc precursor and cadmium precursor used in step (b) of a method according to the invention.

In embodiments, the metal precursor used in step (b) of a method according to the invention is zinc oleate.

In embodiments, the metal precursor used in step (b) of a method according to the invention is a mixture of a zinc precursor and a cadmium precursor, preferably a mixture of a zinc carboxylate and a cadmium carboxylate; more preferably a mixture of a zinc C₁₀₋₂₂ carboxylate and a cadmium C₁₀₋₂₂ carboxylate; even more preferably a mixture of zinc oleate and cadmium oleate, or of zinc stearate and cadmium stearate, or of zinc myristate or cadmium myristate; most preferably a mixture of zinc oleate and cadmium oleate.

In embodiments, the metal precursor used in step (b) of a method according to the invention is a mixture of a zinc precursor and a cadmium precursor, preferably a mixture of a zinc carboxylate and a cadmium carboxylate, as defined above, wherein the molar ratio Cd/(Cd+Zn) in the mixture (i.e. the molar fraction of Cd) is between 0.001 and 1.0, more preferably from 0.02 up to 0.2, most preferably from 0.025 up to 0.133.

In alternative embodiments, the metal precursor used in step (b) of a method according to the invention is not or does not comprise a cadmium precursor, preferably the metal precursor is a (pure) zinc precursor, preferably a (pure) zinc carboxylate or thiolate.

In embodiments, the molar ratio of the number of molecules of the secondary phosphine selenide, on the one hand, and the total number of molecules of the secondary phosphine selenide and the tertiary phosphine selenide, on the other hand, in the mixture used in step (b) of a method according to the invention is from 1% up to 90%, 1% up to 85%, 1% up to 80%, from 1% up to 75%, from 1% up to 70%, from 1% up to 65%, from 1% up to 60%, from 1% up to 55%, from 1% up to 50%, from 1% up to 45%, from 1% up to 40%, from 1% up to 35%, from 1% up to 30%, from 1% up to 25%, from 1% up to 20%, from 1% up to 15%, from 1% up to 10%, from 1% up to 5%, from 5% up to 90%, from 10% up to 90%, from 15% up to 90%, from 20% up to 90%, from 25% up to 90%, from 30% up to 90%, from 35% up to 90%, from 40% up to 90%, from 45% up to 90%, from 50% up to 90%, from 55% up to 90%, from 60% up to 90%, from 65% up to 90%, from 70% up to 90%, from 75% up to 90%, from 80% up to 90%, from 85% up to 90%, from 5% up to 15%, from 10% up to 20%, from 15% up to 25%, from 20% up to 30%, from 25% up to 35%, from 30% up to 40%, from 35% up to 45%, from 40% up to 50%, from 45% up to 55%, from 50% up to 60%, from 55% up to 65%, from 60% up to 70%, from 65% up to 75%, from 70% up to 80%, from 75% up to 85%, from 80% up to 90%, from 85% up to 95%, from 5% up to 25%, from 10% up to 30%, from 15% up to 35%, from 20% up to 40%, from 25% up to 45%, from 30% up to 50%, from 35% up to 55%, from 40% up to 60%, from 45% up to 65%, from 50% up to 70%, from 55% up to 75%, from 60% up to 80%, from 65% up to 85%, from 70% up to 90%, from 75% up to 95%, from 5% up to 35%, from 10% up to 40%, from 15% up to 45%, from 20% up to 50%, from 25% up to 55%, from 30% up to 60%, from 35% up to 65%, from 40% up to 70%, from 45% up to 75%, from 50% up to 80%, from 55% up to 85%, from 60% up to 90%, from 65% up to 95%.

In embodiments, the mixture used in step (b) of a method according to the invention comprises a secondary phosphine sulfide and a tertiary phosphine sulfide, in addition to the secondary phosphine selenide and the tertiary phosphine selenide. Preferably, the molar ratio of the number of molecules of the secondary phosphine sulfide, on the one hand, and the total number of molecules of the secondary phosphine sulfide and the tertiary phosphine sulfide, on the other hand, in the mixture used in step (b) of a method according to the invention is from 1% up to 90%, 1% up to 85%, 1% up to 80%, from 1% up to 75%, from 1% up to 70%, from 1% up to 65%, from 1% up to 60%, from 1% up to 55%, from 1% up to 50%, from 1% up to 45%, from 1% up to 40%, from 1% up to 35%, from 1% up to 30%, from 1% up to 25%, from 1% up to 20%, from 1% up to 15%, from 1% up to 10%, from 1% up to 5%, from 5% up to 90%, from 10% up to 90%, from 15% up to 90%, from 20% up to 90%, from 25% up to 90%, from 30% up to 90%, from 35% up to 90%, from 40% up to 90%, from 45% up to 90%, from 50% up to 90%, from 55% up to 90%, from 60% up to 90%, from 65% up to 90%, from 70% up to 90%, from 75% up to 90%, from 80% up to 90%, from 85% up to 90%, from 5% up to 15%, from 10% up to 20%, from 15% up to 25%, from 20% up to 30%, from 25% up to 35%, from 30% up to 40%, from 35% up to 45%, from 40% up to 50%, from 45% up to 55%, from 50% up to 60%, from 55% up to 65%, from 60% up to 70%, from 65% up to 75%, from 70% up to 80%, from 75% up to 85%, from 80% up to 90%, from 85% up to 95%, from 5% up to 25%, from 10% up to 30%, from 15% up to 35%, from 20% up to 40%, from 25% up to 45%, from 30% up to 50%, from 35% up to 55%, from 40% up to 60%, from 45% up to 65%, from 50% up to 70%, from 55% up to 75%, from 60% up to 80%, from 65% up to 85%, from 70% up to 90%, from 75% up to 95%, from 5% up to 35%, from 10% up to 40%, from 15% up to 45%, from 20% up to 50%, from 25% up to 55%, from 30% up to 60%, from 35% up to 65%, from 40% up to 70%, from 45% up to 75%, from 50% up to 80%, from 55% up to 85%, from 60% up to 90%, from 65% up to 95%.

In embodiments, the mixture used in step (b) of a method according to the invention comprises a secondary phosphine sulfide and a tertiary phosphine sulfide, in addition to the secondary phosphine selenide and the tertiary phosphine selenide. Preferably, the molar ratio of the total number of molecules of the secondary phosphine sulfide and the secondary phosphine selenide, on the one hand, and the total number of molecules of the secondary phosphine sulfide, the secondary phosphine selenide, the tertiary phosphine sulfide and the tertiary phosphine selenide, on the other hand, in the mixture used in step (b) of a method according to the invention is from 1% up to 90%, 1% up to 85%, 1% up to 80%, from 1% up to 75%, from 1% up to 70%, from 1% up to 65%, from 1% up to 60%, from 1% up to 55%, from 1% up to 50%, from 1% up to 45%, from 1% up to 40%, from 1% up to 35%, from 1% up to 30%, from 1% up to 25%, from 1% up to 20%, from 1% up to 15%, from 1% up to 10%, from 1% up to 5%, from 5% up to 90%, from 10% up to 90%, from 15% up to 90%, from 20% up to 90%, from 25% up to 90%, from 30% up to 90%, from 35% up to 90%, from 40% up to 90%, from 45% up to 90%, from 50% up to 90%, from 55% up to 90%, from 60% up to 90%, from 65% up to 90%, from 70% up to 90%, from 75% up to 90%, from 80% up to 90%, from 85% up to 90%, from 5% up to 15%, from 10% up to 20%, from 15% up to 25%, from 20% up to 30%, from 25% up to 35%, from 30% up to 40%, from 35% up to 45%, from 40% up to 50%, from 45% up to 55%, from 50% up to 60%, from 55% up to 65%, from 60% up to 70%, from 65% up to 75%, from 70% up to 80%, from 75% up to 85%, from 80% up to 90%, from 85% up to 95%, from 5% up to 25%, from 10% up to 30%, from 15% up to 35%, from 20% up to 40%, from 25% up to 45%, from 30% up to 50%, from 35% up to 55%, from 40% up to 60%, from 45% up to 65%, from 50% up to 70%, from 55% up to 75%, from 60% up to 80%, from 65% up to 85%, from 70% up to 90%, from 75% up to 95%, from 5% up to 35%, from 10% up to 40%, from 15% up to 45%, from 20% up to 50%, from 25% up to 55%, from 30% up to 60%, from 35% up to 65%, from 40% up to 70%, from 45% up to 75%, from 50% up to 80%, from 55% up to 85%, from 60% up to 90%, from 65% up to 95%.

In embodiments, the molar ratio between the number of Se atoms and the total number of Zn and Cd atoms comprised in the first layer is from 0.50 up to 1.50, from 0.55 up to 1.45, from 0.60 up to 1.40, from 0.65 up to 1.35, from 0.70 up to 1.30, from 0.75 up to 1.25, from 0.80 up to 1.20, from 0.85 up to 1.15, from 0.90 up to 1.10, from 0.95 up to 1.05, from 0.96 up to 1.04, from 0.97 up to 1.03, from 0.98 up to 1.02, from 0.99 up to 1.01. This ratio can be determined by EDX (Energy-dispersive X-ray spectroscopy) on an ensemble of quantum dots.

In additional embodiments, the molar ratio between the total number of Se and S atoms, on the one hand, and the total number of Zn and Cd atoms, on the other hand, comprised in the first layer is from 0.50 up to 1.50, from 0.55 up to 1.45, from 0.60 up to 1.40, from 0.65 up to 1.35, from 0.70 up to 1.30, from 0.75 up to 1.25, from 0.80 up to 1.20, from 0.85 up to 1.15, from 0.90 up to 1.10, from 0.95 up to 1.05, from 0.96 up to 1.04, from 0.97 up to 1.03, from 0.98 up to 1.02, from 0.99 up to 1.01.

In embodiments, the first layer has a thickness up to 1.0 nm, preferably between 0.1 nm and 0.9 nm, more preferably between 0.2 nm and 0.8 nm. The first layer prevents the growth of second layer, e.g. CdSe, on the core, e.g. InP. To get this effect and have good optical properties for down-conversion, the optimal thickness of the first layer is in this range.

It is an additional advantage of the method according to the invention that it provides good control over shell thickness, particular over the thickness of the first layer. In embodiments, the standard deviation on the thickness of the first layer in a population of quantum dots prepared via a method according to the invention is equal to or smaller than 0.10, preferably 0.05, more preferably 0.025.

In embodiments, the yield of step (b) comprised in a method according to the invention is at least 60%, at least 60.5%, at least 61%, at least 61.5%, at least 62%, at least 62.5%, at least 63%, at least 63.5%, at least 64%, at least 64.5%, at least 65%, at least 65.5%, at least 66%, at least 66.5%, at least 67%, at least 67.5%, at least 68%, at least 68.5%, at least 69%, at least 69.5%, at least 70%, at least 70.5%, at least 71%, at least 71.5%, at least 72%, at least 72.5%, at least 73%, at least 73.5%, at least 74%, at least 74.5%, at least 75%, at least 75.5%, at least 76%, at least 76.5%, at least 77%, at least 77.5%, at least 78%, at least 78.5%, at least 79%, at least 79.5%, at least 80%, at least 80.5%, at least 81%, at least 81.5%, at least 82%, at least 82.5%, at least 83%, at least 83.5%, at least 84%, at least 84.5%, or at least 85% after a reaction time of 30 minutes. As explained above, it is an advantage of a method according to the invention that a high yield can be obtained during the synthesis of the first layer. In embodiments, the secondary phosphine selenide in the mixture used in step (b) of a method according to the invention is generated in situ after addition of a secondary phosphine and selenium to the mixture used in step (b).

In embodiments, the secondary phosphine selenide in the mixture used in step (b) of a method according to the invention is added as such and in crystalline form to the mixture used in step (b).

In embodiments, the mixture used in step (b) of a method according to the invention comprises a secondary phosphine sulfide and a tertiary phosphine sulfide, in addition to the secondary phosphine selenide and the tertiary phosphine selenide. Preferably, the secondary phosphine sulfide is generated in situ after addition of a secondary phosphine and sulfur to the mixture used in step (b). Alternatively, the secondary phosphine is added as such and in crystalline form to the mixture used in step (b).

The second layer, which may also be called the second shell, the outer shell or the outer layer, is formed during step (c) of a method according to the invention by contacting the core with a mixture comprising a metal precursor, a secondary phosphine sulfide and a tertiary phosphine sulfide. Forming a high-quality second layer is crucial for obtaining quantum dots with a high photoluminescent quantum yields (PLQY).

A **secondary** phosphine sulfide has the general structure R⁶R⁷P-S, wherein R⁶ and R⁷ are organic moieties, preferably wherein the bond between P and R⁶ and R⁷, respectively, is formally a single phosphor-carbon bond.

In embodiments, R⁶ and R⁷ are hydrocarbon moieties. Preferably, R⁶ and R⁷ are independently an alkyl, a cycloalkyl, an aryl, an alkenyl, a cycloalkenyl, an alkynyl or a cycloalkynyl. More preferably, R⁶ and R⁷ are independently an alkyl, a cycloalkyl or an aryl.

In embodiments, R⁶ and R⁷ are C₂₋₁₀ hydrocarbon moieties. Preferably, R⁶ and R⁷ are independently a C₂₋₁₀ alkyl, a C₃₋₁₀ cycloalkyl, a C₃₋₁₀ aryl, a C₂₋₁₀ alkenyl, a C₃₋₁₀ cycloalkenyl, a C₂₋₁₀ alkynyl or a C₃₋₁₀ cycloalkynyl. More preferably, R⁶ and R⁷ are independently a C₂₋₁₀ alkyl, a C₃₋₁₀ cycloalkyl or a C₃₋₁₀ aryl.

In embodiments, R⁶ and R⁷ are C₂₋₆ hydrocarbon moieties. Preferably, R⁶ and R⁷ are independently a C₂₋₆ alkyl, a C₃₋₆ cycloalkyl, a C₃₋₆ aryl, a C₂₋₆ alkenyl, a C₃₋₆ cycloalkenyl, a C₂₋₆ alkynyl or a C₃₋₆ cycloalkynyl. More preferably, R⁶ and R⁷ are independently a C₂₋₆ alkyl, a C₃₋₆ cycloalkyl or a C₃₋₆ aryl.

In embodiments, R⁶ and R⁷ are the same. The double substitution of P with R¹=R² may be with any group as defined above.

In embodiments, R⁶ and R⁷ are different. The asymmetric substitution of P with R⁶ and R⁷ may be with any two non-identical groups as defined above.

In embodiments, the secondary phosphine sulfide is diphenylphosphine sulfide, di-2-norbornylphosphine sulfide, di-iso-butylphosphine sulfide, di-tert-butylphosphine sulfide, dicyclopentylphosphine sulfide, dicyclohexylphosphine sulfide or 9-phosphabicyclononane sulfide.

In embodiments, the secondary phosphine sulfide is diphenylphosphine sulfide.

A tertiary phosphine sulfide has the general structure R⁸R⁹R¹⁰P=S, wherein R⁸, R⁹ and R¹⁰ are organic moieties, preferably wherein the bond between P and R⁸, R⁹ and R¹⁰, respectively, is formally a single phosphor-carbon bond.

In embodiments, R⁸, R⁹ and R¹⁰ are hydrocarbon moieties. Preferably, R⁸, R⁹ and R¹⁰ are independently an alkyl, a cycloalkyl, an aryl, an alkenyl, a cycloalkenyl, an alkynyl or a cycloalkynyl. More preferably, R⁸, R⁹ and R¹⁰ are independently an alkyl, a cycloalkyl or an aryl.

In embodiments, R⁸, R⁹ and R¹⁰ are C₂₋₁₀ hydrocarbon moieties. Preferably, R⁸, R⁹ and R¹⁰ are independently a C₂₋₁₀ alkyl, a C₃₋₁₀ cycloalkyl, a C₃₋₁₀ aryl, a C₂₋₁₀ alkenyl, a C₃₋₁₀ cycloalkenyl, a C₂₋₁₀ alkynyl or a C₃₋₁₀ cycloalkynyl. More preferably, R⁸, R⁹ and R¹⁰ are independently a C₂₋₁₀ alkyl, a C₃₋₁₀ cycloalkyl or a C₃₋₁₀ aryl.

In embodiments, R⁸, R⁹ and R¹⁰ are C₂₋₆ hydrocarbon moieties. Preferably, R⁸, R⁹ and R¹⁰ are independently a C₂₋₆ alkyl, a C₃₋₆ cycloalkyl, a C₃₋₆ aryl, a C₂₋₆ alkenyl, a C₃₋₆ cycloalkenyl, a C₂₋₆ alkynyl or a C₃₋₆ cycloalkynyl. More preferably, R⁸, R⁹ and R¹⁰ are independently a C₂₋₆ alkyl, a C₃₋₆ cycloalkyl or a C₃₋₆ aryl.

In embodiments, R⁸, R⁹ and R¹⁰ are the same. The triple substitution of P with R⁸=R⁹=R¹⁰ may be with any group as defined above.

In embodiments, R⁸, R⁹ and R¹⁰ are different. The asymmetric substitution of P with R⁸, R⁹ and R¹⁰ may be with any three non-identical groups as defined above.

In embodiments, the tertiary phosphine sulfide is tri-n-octylphosphine sulfide (TOP-S), triethylphosphine sulfide, tri-n-propylphosphine sulfide, tri-n-butylphosphine sulfide, triisobutylphosphine sulfide, tri-n-hexylphosphine sulfide, di-tert-butyl(n-butyl)phosphine sulfide.

In embodiments, the tertiary phosphine sulfide is tri-n-octylphosphine sulfide (TOP-S).

In embodiments, the metal precursor used in step (c) of a method according to the invention is a metal carboxylate or a metal thiolate.

In embodiments, the metal precursor used in step (c) of a method according to the invention is a metal C₁₀₋₂₂ carboxylate, preferably a zinc C₁₀₋₂₂ carboxylate or cadmium C₁₀₋₂₂ carboxylate, more preferably a zinc C₁₀₋₂₂ carboxylate.

In embodiments, the metal precursor used in step (c) of a method according to the invention is a metal dithiocarbamate or a metal thiocarbamate, preferably a zinc dithiocarbamate, a zinc thiocarbamate, a cadmium dithiocarbamate or a zinc thiocarbamate, more preferably a zinc dithiocarbamate or a cadmium dithiocarbamate. Preferably, the dithiocarbamate is a dialkyldithiocarbamate and/or the thiocarbamate is an alkylthiocarbamate, wherein each of the alkyl groups is independently is a C₁₋₁₀ alkyl, preferably a C₂₋₅ alkyl, more preferably an ethyl.

In embodiments, the metal precursor used in step (c) of a method according to the invention is a metal dithiocarbamate, preferably a zinc dithiocarbamate or a cadmium dithiocarbamate, more preferably a zinc dithiocarbamate. Preferably, the dithiocarbamate is a dialkyldithiocarbamate, wherein each of the alkyl groups is independently is a C₁₋₁₀ alkyl, preferably a C₂₋₅ alkyl, more preferably an ethyl.

In embodiments, the metal precursor used in step (c) of a method according to the invention is zinc diethyldithiocarbamate.

In embodiments, the metal precursor used in step (c) of a method according to the invention is a metal oleate, stearate or myristate, preferably zinc oleate, cadmium oleate, zinc stearate, cadmium stearate, zinc myristate or cadmium myristate, more preferably zinc oleate, zinc stearate or zinc myristate.

In alternative embodiments, the metal precursor used in step (c) of the method according to the invention is a C₂₋₆ carboxylate, preferably a zinc C₂₋₆ carboxylate or cadmium C₂₋₆ carboxylate. In embodiments, the metal precursor used in step (c) of the method according to the invention is a C₂₋₄ carboxylate, preferably a zinc C₂₋₄ carboxylate or cadmium C₂₋₄ carboxylate. In embodiments, the metal precursor used in step (c) of the method according to the invention is a C₂₋₃ carboxylate, preferably a zinc C₂₋₃ carboxylate or cadmium C₂₋₃ carboxylate. In embodiments, the metal precursor used in step (c) of the method according to the invention is an acetate, preferably zinc acetate or cadmium acetate.

In embodiments, the metal precursor used in step (c) of a method according to the invention is a zinc or cadmium precursor, preferably a zinc or cadmium carboxylate or thiolate. In preferred embodiments, the metal precursor is a a zinc precursor, preferably a zinc carboxylate or thiolate. The identity of the metal determines the composition of the second layer. For example, if a zinc precursor is used, the second layer will comprise or (essentially) consist of ZnS, wherein Zn is derived from the zinc precursor, and S from the secondary phosphine sulfide and the tertiary phosphine sulfide. As another example, by using a mixture of zinc precursor and cadmium precursor, a second shell comprising or (essentially) consisting of a Zn, Cd and S alloy is obtained. In this context, the notation Zn₁₋ₓCdₓS refers to the composition of the second shell wherein the molar ratio Cd/(Cd+Zn) is x. This molar ratio is determined by, preferably is (essentially) equal to, the molar ratio Cd/(Cd+Zn) in the mixture of zinc precursor and cadmium precursor used in step (c) of a method according to the invention.

In embodiments, the metal precursor used in step (c) of a method according to the invention is zinc oleate.

In embodiments, the metal precursor used in step (c) of a method according to the invention is a mixture of a zinc precursor and a cadmium precursor, preferably a mixture of a zinc carboxylate and a cadmium carboxylate; preferably a mixture of a zinc C₁₀₋₂₂ carboxylate and a cadmium C₁₀₋₂₂ carboxylate; more preferably a mixture of zinc oleate and cadmium oleate, or of zinc stearate and cadmium stearate, or of zinc myristate or cadmium myristate; most preferably a mixture of zinc oleate and cadmium oleate.

In embodiments, the metal precursor used in step (c) of a method according to the invention is a mixture of a zinc precursor and a cadmium precursor, preferably a mixture of a zinc carboxylate and a cadmium carboxylate, as defined above, wherein the molar ratio Cd/(Cd+Zn) in the mixture (i.e. the molar fraction of Cd) is between 0.001 and 1.0, preferably from 0.02 up to 0.2, more preferably from 0.025 up to 0.133.

In alternative embodiments, the metal precursor used in step (c) of a method according to the invention is not or does not comprise a cadmium precursor, preferably the metal precursor is a (pure) zinc precursor, preferably a (pure) zinc carboxylate or thiolate.

In embodiments, the molar ratio of the number of molecules of the secondary phosphine sulfide, on the one hand, and the total number of molecules of the secondary phosphine sulfide and the tertiary phosphine sulfide, on the other hand, in the mixture used in step (c) of a method according to the invention is from 1% up to 90%, 1% up to 85%, 1% up to 80%, from 1% up to 75%, from 1% up to 70%, from 1% up to 65%, from 1% up to 60%, from 1% up to 55%, from 1% up to 50%, from 1% up to 45%, from 1% up to 40%, from 1% up to 35%, from 1% up to 30%, from 1% up to 25%, from 1% up to 20%, from 1% up to 15%, from 1% up to 10%, from 1% up to 5%, from 5% up to 90%, from 10% up to 90%, from 15% up to 90%, from 20% up to 90%, from 25% up to 90%, from 30% up to 90%, from 35% up to 90%, from 40% up to 90%, from 45% up to 90%, from 50% up to 90%, from 55% up to 90%, from 60% up to 90%, from 65% up to 90%, from 70% up to 90%, from 75% up to 90%, from 80% up to 90%, from 85% up to 90%, from 5% up to 15%, from 10% up to 20%, from 15% up to 25%, from 20% up to 30%, from 25% up to 35%, from 30% up to 40%, from 35% up to 45%, from 40% up to 50%, from 45% up to 55%, from 50% up to 60%, from 55% up to 65%, from 60% up to 70%, from 65% up to 75%, from 70% up to 80%, from 75% up to 85%, from 80% up to 90%, from 85% up to 95%, from 5% up to 25%, from 10% up to 30%, from 15% up to 35%, from 20% up to 40%, from 25% up to 45%, from 30% up to 50%, from 35% up to 55%, from 40% up to 60%, from 45% up to 65%, from 50% up to 70%, from 55% up to 75%, from 60% up to 80%, from 65% up to 85%, from 70% up to 90%, from 75% up to 95%, from 5% up to 35%, from 10% up to 40%, from 15% up to 45%, from 20% up to 50%, from 25% up to 55%, from 30% up to 60%, from 35% up to 65%, from 40% up to 70%, from 45% up to 75%, from 50% up to 80%, from 55% up to 85%, from 60% up to 90%, from 65% up to 95%.

In embodiments, the molar ratio between the number of S atoms and the total number of Zn and Cd atoms comprised in the second layer is from 0.50 up to 1.50, from 0.55 up to 1.45, from 0.60 up to 1.40, from 0.65 up to 1.35, from 0.70 up to 1.30, from 0.75 up to 1.25, from 0.80 up to 1.20, from 0.85 up to 1.15, from 0.90 up to 1.10, from 0.95 up to 1.05, from 0.96 up to 1.04, from 0.97 up to 1.03, from 0.98 up to 1.02, from 0.99 up to 1.01. This ratio can be determined by EDX (Energy-dispersive X-ray spectroscopy) on an ensemble of quantum dots.

In embodiments, the second layer has a thickness up to 10 nm, preferably between 1 nm and 10 nm.

In embodiments, the ratio between the volume of the second layer and the volume of the core is from 10 up to 50, from 15 up to 45, from 15 up to 40, from 15 up to 35, from 15 up to 30, or from 15 up to 25. If the volume of the second layer is increased, and thus the volume of the quantum dots, the absorption per quantum dot increases too.

It is an additional advantage of the method according to the invention that it provides good control over shell thickness, particular over the thickness of the second layer. In embodiments, the standard deviation on the thickness of the second layer in a population of quantum dots prepared via a method according to the invention is equal to or smaller than 0.10, preferably 0.05, more preferably 0.025.

In embodiments, the yield of step (c) comprised in a method according to the invention is at least 60%, at least 60.5%, at least 61%, at least 61.5%, at least 62%, at least 62.5%, at least 63%, at least 63.5%, at least 64%, at least 64.5%, at least 65%, at least 65.5%, at least 66%, at least 66.5%, at least 67%, at least 67.5%, at least 68%, at least 68.5%, at least 69%, at least 69.5%, at least 70%, at least 70.5%, at least 71%, at least 71.5%, at least 72%, at least 72.5%, at least 73%, at least 73.5%, at least 74%, at least 74.5%, at least 75%, at least 75.5%, at least 76%, at least 76.5%, at least 77%, at least 77.5%, at least 78%, at least 78.5%, at least 79%, at least 79.5%, at least 80%, at least 80.5%, at least 81%, at least 81.5%, at least 82%, at least 82.5%, at least 83%, at least 83.5%, at least 84%, at least 84.5%, or at least 85% after a reaction time of 10 minutes. As explained above, it is an advantage of a method according to the invention that a high yield can be obtained during the synthesis of the second layer.

In embodiments, the secondary phosphine sulfide in the mixture used in step (c) of a method according to the invention is generated in situ after addition of a secondary phosphine and sulfur to the mixture used in step (c).

**In embodiments,** the secondary phosphine sulfide in the mixture used in step (c) of a method according to the invention is added as such and in crystalline form to the mixture used in step (c).In embodiments, a secondary phosphine selenide and a secondary phosphine sulfide share the same general structure R¹_{sec}R²_{sec}P-X, wherein X is S or Se. In these embodiments R¹=R⁶=R¹_{sec} and R²=R⁷=R²_{sec}, wherein R¹, R², R⁶ and R⁷ have been defined above.

In embodiments, R¹_{sec} and R²_{sec} are hydrocarbon moieties. Preferably, R¹_{sec} and R²_{sec} are independently an alkyl, a cycloalkyl, an aryl, an alkenyl, a cycloalkenyl, an alkynyl or a cycloalkynyl. More preferably, R¹_{sec} and R²_{sec} are independently an alkyl, a cycloalkyl or an aryl.

In embodiments, R¹_{sec} and R²_{sec} are C₂₋₁₀ hydrocarbon moieties. Preferably, R¹_{sec} and R²_{sec} are independently a C₂₋₁₀ alkyl, a C₃₋₁₀ cycloalkyl, a C₃₋₁₀ aryl, a C₂₋₁₀ alkenyl, a C₃₋₁₀ cycloalkenyl, a C₂₋₁₀ alkynyl or a C₃₋₁₀ cycloalkynyl. More preferably, R¹_{sec} and R²_{sec} are independently a C₂₋₁₀ alkyl, a C₃₋₁₀ cycloalkyl or a C₃₋₁₀ aryl.

In embodiments, R¹_{sec} and R²_{sec} are C₂₋₆ hydrocarbon moieties. Preferably, R¹_{sec} and R²_{sec} are independently a C₂₋₆ alkyl, a C₃₋₆ cycloalkyl, a C₃₋₆ aryl, a C₂₋₆ alkenyl, a C₃₋₆ cycloalkenyl, a C₂₋₆ alkynyl or a C₃₋₆ cycloalkynyl. More preferably, R¹_{sec} and R²_{sec} are independently a C₂₋₆ alkyl, a C₃₋₆ cycloalkyl or a C₃₋₆ aryl.

In embodiments, R¹_{sec} and R²_{sec} are the same. The double substitution of P with R¹_{sec}=R²_{sec} may be with any group as defined above.

In embodiments, R¹ and R² are different. The asymmetric substitution of P with R¹_{sec} and R²_{sec} may be with any two non-identical groups as defined above.

In embodiments, the secondary phosphine comprised in the secondary phosphine selenide and sulfide is diphenylphosphine (DPP), di-2-norbornylphosphine, di-iso-butylphosphine, di-tert-butylphosphine, dicyclopentylphosphine, dicyclohexylphosphine or 9-phosphabicyclononane.

In embodiments, the secondary phosphine comprised in the secondary phosphine selenide and sulfide is diphenylphosphine (DPP).

In embodiments, a tertiary phosphine selenide and a tertiary phosphine sulfide share the same general structure R¹ₜₑᵣₜR²ₜₑᵣₜR²ₜₑᵣₜP=X, wherein X is S or Se. In these embodiments R³=R⁸=R¹ₜₑᵣₜ, R⁴=R⁹=R²ₜₑᵣₜ and R⁵=R¹⁰=R³ₜₑᵣₜ, wherein R³, R⁴, R⁵, R⁸, R⁹ and R¹⁰ have been defined above.

In embodiments, R¹ₜₑᵣₜ, R²ₜₑᵣₜ and R³ₜₑᵣₜ are hydrocarbon moieties. Preferably, R¹ₜₑᵣₜ, R²ₜₑᵣₜ and R³ₜₑᵣₜ are independently an alkyl, a cycloalkyl, an aryl, an alkenyl, a cycloalkenyl, an alkynyl or a cycloalkynyl. More preferably, R¹ₜₑᵣₜ, R²ₜₑᵣₜ and R³ₜₑᵣₜ are independently an alkyl, a cycloalkyl or an aryl.

In embodiments, R¹ₜₑᵣₜ, R²ₜₑᵣₜ and R³ₜₑᵣₜ are C₂₋₁₀ hydrocarbon moieties. Preferably, R¹ₜₑᵣₜ, R²ₜₑᵣₜ and R³ₜₑᵣₜ are independently a C₂₋₁₀ alkyl, a C₃₋₁₀ cycloalkyl, a C₃₋₁₀ aryl, a C₂₋₁₀ alkenyl, a C₃₋₁₀ cycloalkenyl, a C₂₋₁₀ alkynyl or a C₃₋₁₀ cycloalkynyl. More preferably, R¹ₜₑᵣₜ, R²ₜₑᵣₜ and R³ₜₑᵣₜ are independently a C₂₋₁₀ alkyl, a C₃₋₁₀ cycloalkyl or a C₃₋₁₀ aryl.

In embodiments, R¹ₜₑᵣₜ, R²ₜₑᵣₜ and R³ₜₑᵣₜ are C₂₋₆ hydrocarbon moieties. Preferably, R¹ₜₑᵣₜ, R²ₜₑᵣₜ and R³ₜₑᵣₜ are independently a C₂₋₆ alkyl, a C₃₋₆ cycloalkyl, a C₃₋₆ aryl, a C₂₋₆ alkenyl, a C₃₋₆ cycloalkenyl, a C₂₋₆ alkynyl or a C₃₋₆ cycloalkynyl. More preferably, R¹ₜₑᵣₜ, R²ₜₑᵣₜ and R³ₜₑᵣₜ are independently a C₂₋₆ alkyl, a C₃₋₆ cycloalkyl or a C₃₋₆ aryl.

In embodiments, R¹ₜₑᵣₜ, R²ₜₑᵣₜ and R³ₜₑᵣₜ are the same. The triple substitution of P with R¹ₜₑᵣₜ=R²ₜₑᵣₜ=R³ₜₑᵣₜ may be with any group as defined above.

In embodiments, R¹ₜₑᵣₜ, R²ₜₑᵣₜ and R³ₜₑᵣₜ are different. The asymmetric substitution of P with R¹ₜₑᵣₜ, R²ₜₑᵣₜ and R³ₜₑᵣₜ may be with any three non-identical groups as defined above.

In embodiments, the tertiary phosphine comprised in the tertiary phosphine selenide and sulfide is tri-n-octylphosphine (TOP), triethylphosphine, tri-n-propylphosphine, tri-n-butylphosphine, triisobutylphosphine, tri-n-hexylphosphine, di-tert-butyl(n-butyl)phosphine.

In embodiments, the tertiary phosphine comprised in the tertiary phosphine selenide and sulfide is tri-n-octylphosphine (TOP).

In embodiments, the metal precursors used in step (b) and step (c) of a method according to the invention are both a metal carboxylate or a metal thiolate.

In embodiments, the metal precursors used in steps (b) and (c) of a method according to the invention are both a metal C₁₀₋₂₂ carboxylate, preferably a zinc C₁₀₋₂₂ carboxylate or cadmium C₁₀₋₂₂ carboxylate, more preferably a zinc C₁₀₋₂₂ carboxylate.

In embodiments, the metal precursors used in steps (b) and (c) of a method according to the invention are both a metal dithiocarbamate or a metal thiocarbamate, preferably a zinc dithiocarbamate, a zinc thiocarbamate, a cadmium dithiocarbamate or a zinc thiocarbamate, more preferably a zinc dithiocarbamate or a cadmium dithiocarbamate. Preferably, the dithiocarbamate is a dialkyldithiocarbamate and/or the thiocarbamate is an alkylthiocarbamate, wherein each of the alkyl groups is independently is a C₁₋₁₀ alkyl, preferably a C₂₋₅ alkyl, more preferably an ethyl.

In embodiments, the metal precursors used in steps (b) and (c) of a method according to the invention are both a metal dithiocarbamate, preferably a zinc dithiocarbamate or a cadmium dithiocarbamate, more preferably a zinc dithiocarbamate. Preferably, the dithiocarbamate is a dialkyldithiocarbamate, wherein each of the alkyl groups is independently is a C₁₋₁₀ alkyl, preferably a C₂₋₅ alkyl, more preferably an ethyl.

In embodiments, the metal precursors used in steps (b) and (c) of a method according to the invention are both zinc diethyldithiocarbamate.

In embodiments, the metal precursors used in steps (b) and (c) of a method according to the invention are both a metal oleate, stearate or myristate, preferably zinc oleate, cadmium oleate, zinc stearate, cadmium stearate, zinc myristate or cadmium myristate, more preferably zinc oleate, zinc stearate or zinc myristate.

In embodiments, the metal precursors used in steps (b) and (c) of a method according to the invention are both a zinc or cadmium precursor, preferably a zinc precursor. In embodiments, the metal precursors used in steps (b) and (c) of a method according to the invention are both a zinc or cadmium carboxylate, preferably a zinc carboxylate. In embodiments, the metal precursors used in steps (b) and (c) of a method according to the invention are both a zinc or cadmium thiolate, preferably a zinc thiolate.

In embodiments, the metal precursors used in steps (b) and (c) of a method according to the invention are both zinc oleate.

In embodiments, the metal precursors used in steps (b) and (c) of a method according to the invention are both a mixture of a zinc precursor and a cadmium precursor, preferably a mixture of a zinc carboxylate and a cadmium carboxylate; more preferably a mixture of a zinc C₁₀₋₂₂ carboxylate and a cadmium C₁₀₋₂₂ carboxylate; even more preferably a mixture of zinc oleate and cadmium oleate, or of zinc stearate and cadmium stearate, or of zinc myristate or cadmium myristate; most preferably a mixture of zinc oleate and cadmium oleate.

In embodiments, the metal precursors used in steps (b) and (c) of a method according to the invention are both mixtures of a zinc precursor and a cadmium precursor, preferably a mixture of a zinc carboxylate and a cadmium carboxylate, as defined above, wherein the molar ratio Cd/(Cd+Zn) in each of these mixtures is between 0.001 and 1.0, more preferably from 0.02 up to 0.2, most preferably from 0.025 up to 0.133.

In embodiments, the metal precursor used in step (b) of a method according to the invention is a zinc precursor, preferably a zinc carboxylate, and the metal carboxylate used in step (c) of a method according to the invention is a mixture of a zinc precursor and a cadmium precursor, preferably a mixture of a zinc carboxylate and a cadmium carboxylate. In these embodiments, the precursor is preferably a C₁₀₋₂₂ carboxylate; more preferably an oleate, a stearate or a myristate; most preferably an oleate. The molar ratio Cd/(Cd+Zn) in the mixture is preferably from 0.001 up to 1.0, preferably from 0.02 up to 0.2, more preferably from 0.025 up to 0.133.

In embodiments, the core is InP, the metal precursor used in step (b) is a zinc carboxylate, preferably zinc oleate, and the metal precursor used in step (c) is a mixture of a zinc carboxylate and a cadmium carboxylate, preferably zinc oleate and cadmium oleate, preferably wherein the molar ratio Cd/(Cd+Zn) in the mixture is from 0.001 up to 1.0, from 0.02 up to 0.2, or from 0.025 up to 0.133. The resulting quantum dot may be represented by InP/ZnSe/Zn₁₋ₓCdₓS, wherein x is preferably from 0.001 up to 1.0, from 0.02 up to 0.2, or from 0.025 up to 0.133.

InP/ZnSe/ZnS quantum dots of this kind are highly efficient and narrow emitters in the visible spectrum, making them useful as luminescent downconverters in for example LED displays.

In embodiments, the core is InGaP, the metal precursor used in step (b) is a zinc carboxylate, preferably zinc oleate, and the metal precursor used in step (c) is a mixture of a zinc carboxylate and a cadmium carboxylate, preferably zinc oleate and cadmium oleate, preferably wherein the molar ratio Cd/(Cd+Zn) in the mixture is from 0.001 up to 1.0, from 0.02 up to 0.2, or from 0.025 up to 0.133. The resulting quantum dot may be represented by InGaP/ZnSe/Zn₁₋ₓCdₓS, wherein x is preferably from 0.001 up to 1.0, from 0.02 up to 0.2, or from 0.025 up to 0.133.

In embodiments, the core is InAs, the metal precursor used in step (b) is a zinc carboxylate, preferably zinc oleate, and the metal precursor used in step (c) is a mixture of a zinc carboxylate and a cadmium carboxylate, preferably zinc oleate and cadmium oleate, preferably wherein the molar ratio Cd/(Cd+Zn) in the mixture is from 0.001 up to 1.0, from 0.02 up to 0.2, or from 0.025 up to 0.133. The resulting quantum dot may be represented by InAs/ZnSe/Zn₁₋ₓCdₓS, wherein x is preferably from 0.001 up to 1.0, from 0.02 up to 0.2, or from 0.025 up to 0.133.

In embodiments, the core is InSb, the metal precursor used in step (b) is a zinc carboxylate, preferably zinc oleate, and the metal precursor used in step (c) is a mixture of a zinc carboxylate and a cadmium carboxylate, preferably zinc oleate and cadmium oleate, preferably wherein the molar ratio Cd/(Cd+Zn) in the mixture is from 0.001 up to 1.0, from 0.02 up to 0.2, or from 0.025 up to 0.133. The resulting quantum dot may be represented by InSb/ZnSe/Zn₁₋ₓCdₓS, wherein x is preferably from 0.001 up to 1.0, from 0.02 up to 0.2, or from 0.025 up to 0.133.

In embodiments, the core is InSbAs, the metal precursor used in step (b) is a zinc carboxylate, preferably zinc oleate, and the metal precursor used in step (c) is a mixture of a zinc carboxylate and a cadmium carboxylate, preferably zinc oleate and cadmium oleate, preferably wherein the molar ratio Cd/(Cd+Zn) in the mixture is from 0.001 up to 1.0, from 0.02 up to 0.2, or from 0.025 up to 0.133. The resulting quantum dot may be represented by InSbAs/ZnSe/Zn₁₋ₓCdₓS, wherein x is preferably from 0.001 up to 1.0, from 0.02 up to 0.2, or from 0.025 up to 0.133.

In embodiments, the core is InP, the metal precursor used in step (b) is a zinc thiolate and the metal precursor used in step (c) is a mixture of a zinc thiolate and a cadmium thiolate, preferably wherein the molar ratio Cd/(Cd+Zn) in the mixture is from 0.001 up to 1.0, from 0.02 up to 0.2, or from 0.025 up to 0.133. The resulting quantum dot may be represented by InP/ZnSe/Zn₁₋ₓCdₓS, wherein x is preferably from 0.001 up to 1.0, from 0.02 up to 0.2, or from 0.025 up to 0.133.

In embodiments, the core is InGaP, the metal precursor used in step (b) is a thiolate and the metal precursor used in step (c) is a mixture of a zinc thiolate and a cadmium thiolate, preferably wherein the molar ratio Cd/(Cd+Zn) in the mixture is from 0.001 up to 1.0, from 0.02 up to 0.2, or from 0.025 up to 0.133. The resulting quantum dot may be represented by InGaP/ZnSe/Zn₁₋ₓCdₓS, wherein x is preferably from 0.001 up to 1.0, from 0.02 up to 0.2, or from 0.025 up to 0.133.

In embodiments, the core is InAs, the metal precursor used in step (b) is a zinc thiolate and the metal precursor used in step (c) is a mixture of a zinc thiolate and a cadmium thiolate, preferably wherein the molar ratio Cd/(Cd+Zn) in the mixture is from 0.001 up to 1.0, from 0.02 up to 0.2, or from 0.025 up to 0.133. The resulting quantum dot may be represented by InAs/ZnSe/Zn₁₋ₓCdₓS, wherein x is preferably from 0.001 up to 1.0, from 0.02 up to 0.2, or from 0.025 up to 0.133.

In embodiments, the core is InSb, the metal precursor used in step (b) is a zinc thiolate and the metal precursor used in step (c) is a mixture of a zinc thiolate and a cadmium thiolate, preferably wherein the molar ratio Cd/(Cd+Zn) in the mixture is from 0.001 up to 1.0, from 0.02 up to 0.2, or from 0.025 up to 0.133. The resulting quantum dot may be represented by InSb/ZnSe/Zn₁₋ₓCdₓS, wherein x is preferably from 0.001 up to 1.0, from 0.02 up to 0.2, or from 0.025 up to 0.133.

In embodiments, the core is InSbAs, the metal precursor used in step (b) is a zinc thiolate and the metal precursor used in step (c) is a mixture of a zinc thiolate and a cadmium thiolate, preferably wherein the molar ratio Cd/(Cd+Zn) in the mixture is from 0.001 up to 1.0, from 0.02 up to 0.2, or from 0.025 up to 0.133. The resulting quantum dot may be represented by InSbAs/ZnSe/Zn₁₋ₓCdₓS, wherein x is preferably from 0.001 up to 1.0, from 0.02 up to 0.2, or from 0.025 up to 0.133.

In embodiments, a method according to the invention comprises the step of (d) forming a ligand layer on the second layer. A quantum dot prepared via such a method results in a quantum dot comprising a core, a first layer on the core, a second layer on the first layer and a ligand layer on the second layer. The ligand layer may also be called the ligand shell, the third shell or layer, or the external shell or layer.

In embodiments, the first layer, the second layer and the second layer are (semi)spherical layers arranged concentrically around the core.

In embodiments, the first layer surrounds the core, the second layer surrounds the second layer and the ligand layer surrounds the second layer.

In embodiments, the ligand layer comprises an organic compound. Preferably, the ligand layer (essentially) consists of one or more organic compounds. In this context, the organic compounds may be called organic ligands.

It is understood that an organic compound may be an organic moiety bound to another layer comprised in the quantum dot, preferably the second layer. For example, a ligand layer comprising a thiol may mean that the -SH moiety of the thiol is bound to a ZnS comprised in the second layer. As such, the number of organic compounds or ligands comprised in the ligand layer includes the number of organic moieties bound to the other layers.

In embodiments, the ligand layer comprises from 10 up to 2000, from 10 up to 1900, from 10 up to 1800, from 10 up to 1700, from 10 up to 1600, from 10 up to 1500, from 10 up to 1400, from 10 up to 1300, from 10 up to 1200, from 10 up to 1100, from 10 up to 1000, from 10 up to 900, from 10 up to 800, from 10 up to 700, from 10 up to 600, from 10 up to 500, from 10 up to 400, from 10 up to 300 organic, from 50 up to 800, from 100 up to 700, from 150 up to 600 or from 200 up to 500 organic ligands (per quantum dot).

In embodiments, the ligand layer comprises an oleylamine.

In embodiments, step (b) and/or step (c) comprised in a method according to the invention is performed at a temperature from 180°C up to 350°C, from 180°C up to 340°C, from 180°C up to 330°C, from 180°C up to 320°C, from 180°C up to 310°C, from 180°C up to 300°C, from 180°C up to 290°C, from 180°C up to 280°C, from 180°C up to 270°C, from 180°C up to 260°C, from 180°C up to 250°C, from 190°C up to 350°C, from 190°C up to 340°C, from 190°C up to 330°C, from 190°C up to 320°C, from 190°C up to 310°C, from 190°C up to 300°C, from 190°C up to 290°C, from 190°C up to 280°C, from 190°C up to 270°C, from 190°C up to 260°C, from 190°C up to 250°C, from 200°C up to 350°C, from 200°C up to 340°C, from 200°C up to 330°C, from 200°C up to 320°C, from 200°C up to 310°C, from 200°C up to 300°C, from 200°C up to 290°C, from 200°C up to 280°C, from 200°C up to 270°C, from 200°C up to 260°C, from 200°C up to 250°C, from 210°C up to 350°C, from 210°C up to 340°C, from 210°C up to 330°C, from 210°C up to 320°C, from 210°C up to 310°C, from 210°C up to 300°C, from 210°C up to 290°C, from 210°C up to 280°C, from 210°C up to 270°C, from 210°C up to 260°C, from 210°C up to 250°C, from 220°C up to 350°C, from 220°C up to 340°C, from 220°C up to 330°C, from 220°C up to 320°C, from 220°C up to 310°C, from 220°C up to 300°C, from 220°C up to 290°C, from 220°C up to 280°C, from 220°C up to 270°C, from 220°C up to 260°C, from 220°C up to 250°C, from 230°C up to 350°C, from 230°C up to 340°C, from 230°C up to 330°C, from 230°C up to 320°C, from 230°C up to 310°C, from 230°C up to 300°C, from 230°C up to 290°C, from 230°C up to 280°C, from 230°C up to 270°C, from 230°C up to 260°C, or from 230°C up to 250°C.

In embodiments, step (b) comprised in a method according to the invention has a reaction time between 5 and 60 minutes, between 5 and 55 minutes, between 5 and 50 minutes, between 5 and 45 minutes, between 5 and 40 minutes, between 10 and 60 minutes, between 10 and 55 minutes, between 10 and 50 minutes, between 10 and 45 minutes, between 10 and 40 minutes, between 20 and 60 minutes, between 20 and 55 minutes, between 20 and 50 minutes, between 20 and 45 minutes, or between 20 and 40 minutes.

In embodiments, step (c) comprised in a method according to the invention has a reaction time between 1 and 30 minutes, between 1 and 25 minutes, between 1 and 20 minutes, between 5 and 30 minutes, between 5 and 25 minutes, or between 5 and 20 minutes.

In embodiments:
- step (b) comprised in a method according to the invention has a reaction time between 15 and 45 minutes and step (c) comprised in a method according to the invention has a reaction time between 1 and 30 minutes; or
- step (b) comprised in a method according to the invention has a reaction time between 20 and 40 minutes and step (c) comprised in a method according to the invention has a reaction time between 1 and 30 minutes; or
- step (b) comprised in a method according to the invention has a reaction time between 15 and 45 minutes and step (c) comprised in a method according to the invention has a reaction time between 5 and 20 minutes; or
- step (b) comprised in a method according to the invention has a reaction time between 20 and 40 minutes and step (c) comprised in a method according to the invention has a reaction time between 5 and 20 minutes.

In embodiments:
- step (b) comprised in a method according to the invention has a reaction time between 15 and 45 minutes and step (c) comprised in a method according to the invention has a reaction time between 1 and 30 minutes, and step (b) and/or step (c) are performed at a temperature from 200°C up to 350°C; or
- step (b) comprised in a method according to the invention has a reaction time between 20 and 40 minutes and step (c) comprised in a method according to the invention has a reaction time between 1 and 30 minutes, and step (b) and/or step (c) are performed at a temperature from 200°C up to 350°C; or
- step (b) comprised in a method according to the invention has a reaction time between 15 and 45 minutes and step (c) comprised in a method according to the invention has a reaction time between 5 and 20 minutes, and step (b) and/or step (c) are performed at a temperature from 200°C up to 350°C; or
- step (b) comprised in a method according to the invention has a reaction time between 20 and 40 minutes and step (c) comprised in a method according to the invention has a reaction time between 5 and 20 minutes, and step (b) and/or step (c) are performed at a temperature from 200°C up to 350°C; or
- step (b) comprised in a method according to the invention has a reaction time between 15 and 45 minutes and step (c) comprised in a method according to the invention has a reaction time between 1 and 30 minutes, and step (b) and/or step (c) are performed at a temperature from 200°C up to 300°C; or
- step (b) comprised in a method according to the invention has a reaction time between 20 and 40 minutes and step (c) comprised in a method according to the invention has a reaction time between 1 and 30 minutes, and step (b) and/or step (c) are performed at a temperature from 200°C up to 300°C; or
- step (b) comprised in a method according to the invention has a reaction time between 15 and 45 minutes and step (c) comprised in a method according to the invention has a reaction time between 5 and 20 minutes, and step (b) and/or step (c) are performed at a temperature from 200°C up to 300°C; or
- step (b) comprised in a method according to the invention has a reaction time between 20 and 40 minutes and step (c) comprised in a method according to the invention has a reaction time between 5 and 20 minutes, and step (b) and/or step (c) are performed at a temperature from 200°C up to 300°C
- step (b) comprised in a method according to the invention has a reaction time between 15 and 45 minutes and step (c) comprised in a method according to the invention has a reaction time between 1 and 30 minutes, and step (b) and/or step (c) are performed at a temperature from 200°C up to 250°C; or
- step (b) comprised in a method according to the invention has a reaction time between 20 and 40 minutes and step (c) comprised in a method according to the invention has a reaction time between 1 and 30 minutes, and step (b) and/or step (c) are performed at a temperature from 200°C up to 250°C; or
- step (b) comprised in a method according to the invention has a reaction time between 15 and 45 minutes and step (c) comprised in a method according to the invention has a reaction time between 5 and 20 minutes, and step (b) and/or step (c) are performed at a temperature from 200°C up to 250°C; or
- step (b) comprised in a method according to the invention has a reaction time between 20 and 40 minutes and step (c) comprised in a method according to the invention has a reaction time between 5 and 20 minutes, and step (b) and/or step (c) are performed at a temperature from 300°C up to 250°C.

In a further aspect related to the invention but not forming a part of it, the text provides a quantum dot obtained by, obtainable by or prepared by any of the methods according to the invention as described herein. Such a quantum dot may be called a quantum dot prepared according to the invention.

In a further aspect related to the invention but not forming a part of it, the text provides a polymer film comprising a quantum dot prepared according to the invention. A quantum dot prepared according to the invention keeps its advantageous properties when embedded in a polymer film, which is a solid layer. Such a polymer film may be called a polymer film prepared according to the invention.

In a further aspect related to the invention but not forming a part of it, the text provides a luminescent downconverter for converting down light frequency, comprising a quantum dot prepared according to the invention or a polymer film prepared according to the invention. In the frame of the present document, a luminescent downconverter is a device able to convert light with a higher frequency to light with a lower frequency (i.e. downconversion). The properties of a quantum dot prepared according to the invention are especially advantageous for downconversion.

In a further aspect, the text provides a method for preparing a luminescent downconverter, the method comprising a method for preparing a quantum dot according to the invention.

In this document and in its claims, the verb "to comprise" and its conjugations is used in its non-limiting sense to mean that items following the word are included, but items not specifically mentioned are not excluded. In addition the verb "to consist" may be replaced by "to consist essentially of" meaning that a product, an assay device respectively a method or a use as defined herein may comprise additional component(s) respectively additional step(s) than the ones specifically identified, said additional component(s), respectively step(s) not altering the unique characteristic of the invention.

In addition, reference to an element by the indefinite article "a" or "an" does not exclude the possibility that more than one of the element is present, unless the context clearly requires that there be one and only one of the elements. The indefinite article "a" or "an" thus usually means "at least one".

### Legend to the figures

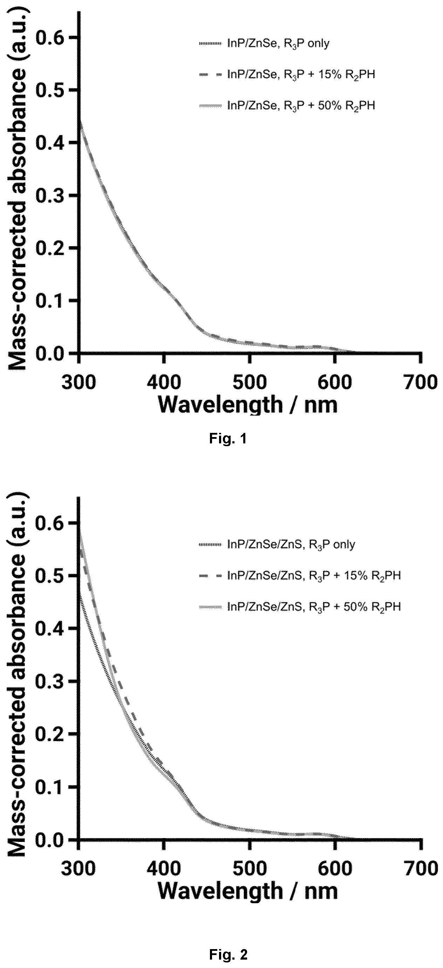

**Figure 1****.** Mass-corrected absorbance (a.u.) at various wavelengths for InP/ZnSe quantum dots synthesized with the use of tertiary phosphines only (short dashes), 85% tertiary phosphines + 15% secondary phosphines (long dashes) and 50% tertiary phosphines + 50% secondary phosphines (solid line).
**Figure 2****.** Mass-corrected absorbance (a.u.) at various wavelengths for InP/ZnSe/ZnS quantum dots synthesized with the use of tertiary phosphines only (short dashes), 85% tertiary phosphines + 15% secondary phosphines (long dashes) and 50% tertiary phosphines + 50% secondary phosphines (solid line).

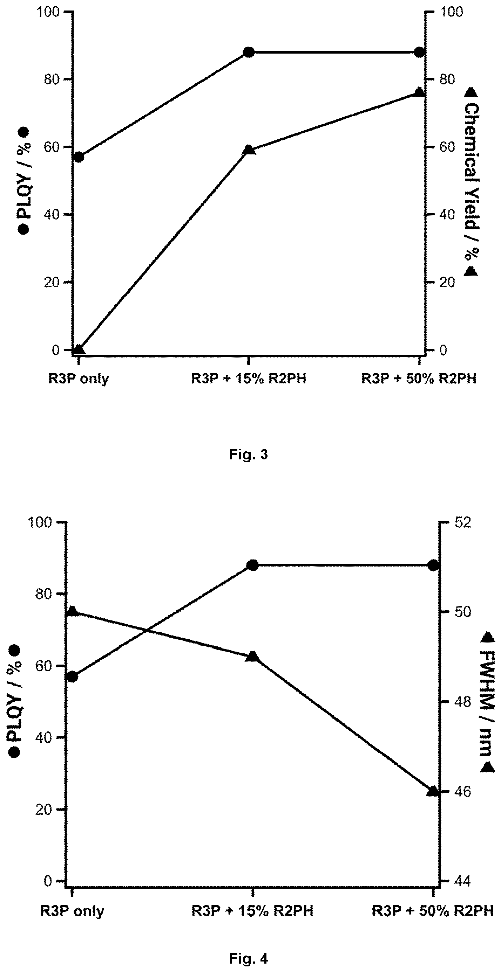

**Figure 3****.** Absolute PLQY values of the InP/ZnSe/ZnS quantum dots obtained by syntheses with the use of tertiary phosphines only, 85% tertiary phosphines + 15% secondary phosphines and 50% tertiary phosphines + 50% secondary phosphines (circles), together with their chemical yields (triangles).
**Figure 4****.** Absolute PLQY values (circles) and the full width at half maximum (FWHM, triangles)) of InP/ZnSe/ZnS quantum dots obtained by syntheses with the use of tertiary phosphines only, 85% tertiary phosphines + 15% secondary phosphines and 50% tertiary phosphines + 50% secondary phosphines.

### Examples

The invention is explained in more detail below with a number of examples, which are not to be construed as limiting the scope of the invention. The invention is not limited to the forms of implementation described in the cases given as examples. The invention also extends to each combination of measures as described above, independently from each other.

### Example 1 - InP/ZnSe/ZnS synthesis

### InP synthesis

InP cores are synthesized by mixing InCl₃ and ZnCl₂ in oleylamine and injecting a phosphor precursor (tris(diethylamino)phosphine for example) at elevated temperature (180 °C).

### InP/ZnSe synthesis

Addition of 5 mol% of DPP to a selenium-saturated (2.24 M) TOP-Se precursor prior to injection results in quantum dot's with a higher photoluminescent quantum yield (PLQY) than those synthesized without the DPP addition to TOP-Se. In both cases the same InP nanocrystals are used as cores, and the same synthesis conditions and amounts are kept.

Figure 1 shows an example of the evolution of the emission properties of the quantum dots during the synthesis. The QDs with DPP added to the TOP-Se precursor show an overall higher relative PLQY than the QDs synthesized without DPP. The PLQY is increased by a factor of 6 at the last point taken of the ZnSe shell growth when using DPP. Absolute PLQY measurements were taken from another synthesis with the same conditions (and DPP-ZnSe addition) for reproducibility purposes, and the same trends were observed: high and stable PL increasing during reaction. Figure 1 (right) shows the absolute PLQY values for these points. A PLQY between 40 and 60% is observed for the InP/ZnSe at this point, a large increase over the InP/ZnSe synthesized without DPP which have an estimated QY in the range of 5-15%. The shell growth is complete in 30 minutes.

### InP/ZnSe/ZnS synthesis

ZnS growth on the outer shell is more challenging than ZnSe. Using TOP-S and Zn oleate as precursors, at 300°C, does not yield evidence of ZnS shell growth. Figure 2 shows absorbance and emission spectra, and peak parameters for aliquots taken during the hypothetical ZnS formation on InP/ZnSe quantum dots. No growth is seen on the absorbance spectra, and no significant emission peak changes are observed.

ZnS growth can be enabled by increasing the reactivity of one of the precursors, either using a more reactive Zn carboxylate (such as acetate), or a more reactive phosphine (such as DPP, diphenylphosphine). DPP reacts with sulfur to form DPP-S, diphenylphosphine sulfide, a white precipitate. DPP-S can be dissolved in TOP-S: a 15 mol% solution of DPP-S/TOP-S solution is used for the synthesis in these experiments. The results presented in Figure 2, a significant increase in PL (photoluminescence) is observed.

### Full synthesis

Finally we were able to merge the previous three results to synthesize high-QY InP/ZnSe/ZnS quantum dots: DPP in TOP-Se for a brighter ZnSe shell, and DPP-S in TOP-S for the formation of a ZnS shell with Zn oleate. Figure 5 compiles the absolute quantum yield measurements of the ZnSe, ZnS, and purification steps of the final synthesis. The resulting QD exhibit a PLQY of 90-95% at the final synthesis stage. The final chemical yields for S and Se in the ZnS and ZnSe shells with the addition of DPP are 85% and 75% respectively.

During purification steps with different anti-solvents (ethanol and acetone) the PLQY remains above 90%, showing a slight increase towards 100%.

## Claims

1. A method for preparing a quantum dot, comprising the steps of:
(a) preparing a core of a binary, ternary or quaternary material comprising:
- one or more first core elements selected from the group consisting of In, Ga and Al, and
- one or more second core elements selected from the group consisting of P, As and Sb;
(b) forming a first layer on the core by contacting the core with a mixture comprising a metal precursor, a secondary phosphine selenide and a tertiary phosphine selenide;
(c) forming a second layer on the first layer by contacting the product of step (b) with a mixture comprising a metal precursor, a secondary phosphine sulfide and a tertiary phosphine sulfide.

2. The method of claim 1, wherein one of the first core elements is In, preferably wherein the binary, ternary or quaternary material is InP, InGaP, InAs, InSb or InSbAs.

3. The method of claim 1 or 2, wherein the secondary phosphine selenide is diphenylphosphine selenide, di-2-norbornylphosphine selenide, di-iso-butylphosphine selenide, di-tert-butylphosphine selenide, dicyclopentylphosphine selenide, dicyclohexylphosphine selenide or 9-phosphabicyclononane selenide.

4. The method of any one of claim 1 to 3, wherein the tertiary phosphine selenide is a trialkyl phosphine selenide.

5. The method of claim 4, wherein the trialkyl phosphine selenide is tri-n-octylphosphine selenide (TOP-Se).

6. The method of any one of claim 1 to 5, wherein the tertiary phosphine sulfide is a trialkyl phosphine sulfide.

7. The method of claim 6, wherein the tertiary phosphine sulfide is tri-n-octylphosphine sulfide (TOP-S).

8. The method of any one of claims 1 to 7, wherein the metal used in step (b) and/or in step (c) is zinc or cadmium, preferably zinc.

9. The method of any one of claims 1 to 8, wherein the metal precursor used in step (b) and/or in step (c) is a metal carboxylate or a metal thiolate, preferably a metal carboxylate selected from a metal oleate, a metal stearate and a metal myristate.

10. The method of any one of claims 1 to 9, wherein step (b) and/or step (c) is performed at a temperature from 200°C up to 350°C, preferably from 200°C up to 300°C .

11. The method of any one of claims 1 to 10, wherein step (b) has a reaction time between 15 and 45 minutes, preferably between 20 and 40 minutes.

12. The method of any one of claims 1 to 11, wherein step (c) has a reaction time between 1 and 30 minutes, preferably between 5 and 20 minutes.

13. The method of any one of claims 1 to 12, wherein the molar ratio between the number of molecules of the secondary phosphine selenide and the total number of molecules of the secondary phosphine selenide and the tertiary phosphine selenide is from 40% up to 60%.

14. The method of any one of claims 1 to 13, wherein the molar ratio between the number of molecules of the secondary phosphine sulfide and the total number of molecules of the secondary phosphine sulfide and the tertiary phosphine sulfide is from 40% up to 60%.

## Patentansprüche

1. Verfahren zum Herstellen eines Quantenpunkts, umfassend die Schritte:
(a) Herstellen eines Kerns aus einem binären, ternären oder quaternären Material, umfassend:
- ein oder mehrere erste Kernelemente, ausgewählt aus der Gruppe bestehend aus In, Ga und Al, und
- ein oder mehrere zweite Kernelemente, ausgewählt aus der Gruppe bestehend aus P, As und Sb;
(b) Bilden einer ersten Schicht auf dem Kern durch Inkontaktbringen des Kerns mit einem Gemisch, umfassend einen Metallvorläufer, ein sekundäres Phosphinselenid und ein tertiäres Phosphinselenid;
(c) Bilden einer zweiten Schicht auf der ersten Schicht durch Inkontaktbringen des Produkts aus Schritt (b) mit einem Gemisch, umfassend einen Metallvorläufer, ein sekundäres Phosphinsulfid und ein tertiäres Phosphinsulfid.

2. Verfahren nach Anspruch 1, wobei eines der ersten Kernelemente In ist, vorzugsweise wobei das binäre, ternäre oder quaternäre Material InP, InGaP, InAs, InSb oder InSbAs ist.

3. Verfahren nach Anspruch 1 oder 2, wobei das sekundäre Phosphinselenid Diphenylphosphinselenid, Di-2-norbornylphosphinselenid, Di-iso-butylphosphinselenid, Di-tert-butylphosphinselenid, Dicyclopentylphosphinselenid, Dicyclohexylphosphinselenid oder 9-Phosphabicyclononanselenid ist.

4. Verfahren nach einem der Ansprüche 1 bis 3, wobei das tertiäre Phosphinselenid ein Trialkylphosphinselenid ist.

5. Verfahren nach Anspruch 4, wobei das Trialkylphosphinselenid Tri-n-octylphosphinselenid (TOP-Se) ist.

6. Verfahren nach einem der Ansprüche 1 bis 5, wobei das tertiäre Phosphinsulfid ein Trialkylphosphinsulfid ist.

7. Verfahren nach Anspruch 6, wobei das Trialkylphosphinsulfid Tri-n-octylphosphinsulfid (TOP-S) ist.

8. Verfahren nach einem der Ansprüche 1 bis 7, wobei das in Schritt (b) und/oder in Schritt (c) verwendete Metall Zink oder Cadmium ist, vorzugsweise Zink.

9. Verfahren nach einem der Ansprüche 1 bis 8, wobei der in Schritt (b) und/oder in Schritt (c) verwendete Metallvorläufer ein Metallcarboxylat oder ein Metallthiolat ist, vorzugsweise ein Metallcarboxylat, ausgewählt aus der Gruppe bestehend aus einem Metalloleat, einem Metallstearat und einem Metallmyristat.

10. Verfahren nach einem der Ansprüche 1 bis 9, wobei Schritt (b) und/oder Schritt (c) bei einer Temperatur von 200 °C bis 350 °C, vorzugsweise von 200 °C bis 300 °C, durchgeführt wird.

11. Verfahren nach einem der Ansprüche 1 bis 10, wobei Schritt (b) eine Reaktionszeit zwischen 15 und 45 Minuten aufweist, vorzugsweise zwischen 20 und 40 Minuten.

12. Verfahren nach einem der Ansprüche 1 bis 11, wobei Schritt (c) eine Reaktionszeit zwischen 1 und 30 Minuten aufweist, vorzugsweise zwischen 5 und 20 Minuten.

13. Verfahren nach einem der Ansprüche 1 bis 12, wobei das Molarverhältnis zwischen der Anzahl der Moleküle des sekundären Phosphinselenids und der Gesamtanzahl der Moleküle des sekundären Phosphinselenids und des tertiären Phosphinselenids von 40 % bis 60 % beträgt.

14. Verfahren nach einem der Ansprüche 1 bis 13, wobei das Molarverhältnis zwischen der Anzahl der Moleküle des sekundären Phosphinsulfids und der Gesamtanzahl der Moleküle des sekundären Phosphinsulfids und des tertiären Phosphinsulfids von 40 % bis 60 % beträgt.

## Revendications

1. Procédé de préparation d'un point quantique, comprenant les étapes suivantes :
(a) préparer un cœur d'un matériau binaire, ternaire ou quaternaire comprenant :
- un ou plusieurs premiers éléments de cœur sélectionnés dans le groupe consistant en In, Ga et Al, et
- un ou plusieurs deuxièmes éléments de cœur sélectionnés dans le groupe consistant en P, As et Sb ;
(b) former une première couche sur le cœur en mettant en contact le cœur avec un mélange comprenant un précurseur métallique, un séléniure de phosphine secondaire et un séléniure de phosphine tertiaire ;
(c) former une deuxième couche sur la première couche en mettant en contact le produit de l'étape (b) avec un mélange comprenant un précurseur métallique, un sulfure de phosphine secondaire et un sulfure de phosphine tertiaire.

2. Procédé selon la revendication 1, dans lequel l'un des premiers éléments de cœur est In, de préférence dans lequel le matériau binaire, ternaire ou quaternaire est InP, InGaP, InAs, InSb ou InSbAs.

3. Procédé selon la revendication 1 ou 2, dans lequel le séléniure de phosphine secondaire est le séléniure de diphénylphosphine, le séléniure de di-2-norbornylphosphine, le séléniure de di-iso-butylphosphine, le séléniure de di-tert-butylphosphine, le séléniure de dicyclopentylphosphine, le séléniure de dicyclohexylphosphine ou le séléniure de 9-phosphabicyclononane.

4. Procédé selon l'une quelconque des revendications 1 à 3, dans lequel le séléniure de phosphine tertiaire est un séléniure de phosphine trialkyle.

5. Procédé selon la revendication 4, dans lequel le séléniure de phosphine trialkyle est le séléniure de tri-n-octylphosphine (TOP-Se).

6. Procédé selon l'une quelconque des revendications 1 à 5, dans lequel le sulfure de phosphine tertiaire est un sulfure de phosphine trialkyle.

7. Procédé selon la revendication 6, dans lequel le sulfure de phosphine trialkyle est le sulfure de tri-n-octylphosphine (TOP-S).

8. Procédé selon l'une quelconque des revendications 1 à 7, dans lequel le métal utilisé à l'étape (b) et/ou à l'étape (c) est le zinc ou le cadmium, de préférence le zinc.

9. Procédé selon l'une quelconque des revendications 1 à 8, dans lequel le précurseur métallique utilisé à l'étape (b) et/ou à l'étape (c) est un carboxylate métallique ou un thiolate métallique, de préférence un carboxylate métallique sélectionné parmi un oléate métallique, un stéarate métallique et un myristate métallique.

10. Procédé selon l'une quelconque des revendications 1 à 9, dans lequel l'étape (b) et/ou l'étape (c) est réalisée à une température de 200°C à 350°C, de préférence de 200°C à 300°C.

11. Procédé selon l'une quelconque des revendications 1 à 10, dans lequel l'étape (b) a un temps de réaction compris entre 15 et 45 minutes, de préférence entre 20 et 40 minutes.

12. Procédé selon l'une quelconque des revendications 1 à 11, dans lequel l'étape (c) a un temps de réaction compris entre 1 et 30 minutes, de préférence entre 5 et 20 minutes.

13. Procédé selon l'une quelconque des revendications 1 à 12, dans lequel le rapport molaire entre le nombre de molécules du séléniure de phosphine secondaire et le nombre total de molécules du séléniure de phosphine secondaire et du séléniure de phosphine tertiaire est de 40 % à 60 %.

14. Procédé selon l'une quelconque des revendications 1 à 13, dans lequel le rapport molaire entre le nombre de molécules du sulfure de phosphine secondaire et le nombre total de molécules du sulfure de phosphine secondaire et du sulfure de phosphine tertiaire est de 40 % à 60 %.
